# EUROPEAN PATENT APPLICATION

(11) **EP 3 620 706 A1**
(43) Date of publication of application: **11.03.2020**
(21) Application number: 18020440.6
(22) Date of filing: 10.09.2018
(51) Int. Cl.: F16L 58/16, F16L 55/165

(54) **INTERNAL STRUCTURAL WRAP REPAIR**

(71) Applicant: Clarks Consulting, Cranshaws TD11 3SJ (GB)
(72) Inventor: Clarke, Shaun, Cranshaws TD11 3SJ (GB)

(57) **Abstract**

The purpose of the Internal Composite Structural Wrap Repair (ICSWR) is to repair damaged, cracked and corroded tubulars or offshore caissons using a structural strength composite material.

The ICWR comprises a structural membrane such as woven carbon fibre but can be combined with glass fibre, aramid or other woven or braided material, combined with a hydrophobic epoxy resin. In certain circumstances the resin used may be a urethane based resin.
The membrane material is infused with the resin using a standard infusion bath/roller assembly or alternatively using a vacuum system.

The membrane is then held in position via a positioning tube to structurally repair the damaged,cracked and corroded tubulars or offshore caissons.

## Description

The purpose of the Internal Composite Wrap Repair (ICSWR) is to repair damaged, cracked and corroded tubulars or offshore caissons using a structural strength composite material.

The ICWR comprises a structural membrane (1) such as woven carbon fibre but can be combined with glass fibre, aramid or other woven or braided material, combined with a hydrophobic epoxy resin. In certain circumstances the resin used may be a urethane based resin.
The membrane material is infused with the resin using a standard infusion bath/roller assembly or alternatively using a vacuum system.

This infusion is carried out external to the tubular / caisson (2) but nearby in order to maximise the time available within the working gel time of the resin.
Once infused the membrane is fitted external to a positioning tube (3) by means of Velcro hangers (4) attached to the membrane and marrying with Velcro pads (5) attached to the positioning tube. These are located above the membrane position such that the velcro attachments are kept clear of the resin matrix.

The positioning tube is made of PVC coated cloth such as used in the water weight industry and in this case is fitted with lifting attachments externally for the length of the tube and also fitted with a central porting pipe (6). This in turn is connected to a through connection port (7) manufactured into the closed end of the positioning tube via a quick release coupling (8) or alternatively a coupling designed to disconnect on demand.

The main function of the central porting pipe is to allow air to pass from one side the repair to the other thereby avoiding any vacuum effect when removing the positioning tube post cure.

The closed end of the positioning tube is also fitted with a lifting quad assembly (9) designed to lift a proportion of the weight of the water in the tube.
The resultant head of water can be released by opening the through connection.

The combined positioning tube and membrane assembly is then positioned into the tubular/caisson and by utilising the 'daisy-chain' lifting attachments (10) fitted to the positioning tube, it is lowered into the tubular/caisson to the predetermined position of the defect to be repaired. The positioning tube is then clamped to the positioning ring (11) using a split-clamp (12) and placed on top of the entry flange or the support frame/flange (13).

Once the structural repair membrane reaches its predetermined position the lifting line as attached to the quad lifting assembly (14), is 'tied off'. The positioning tube is then partially filled with water such that a resultant head of water is seen at the repair section.

The head of water is maintained until the required percentage of cure of the resin is achieved, thereafter the head is released and the positioning tube recovered.

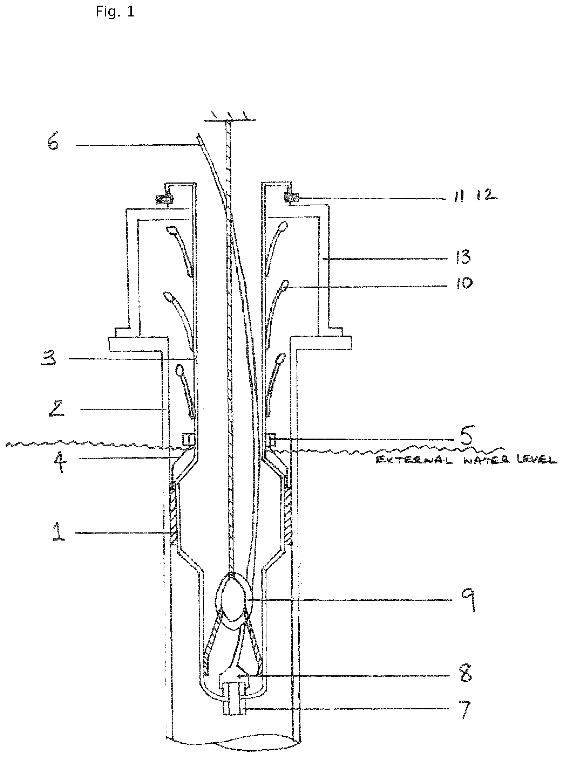

## Claims

1. The method of repairing damaged, cracked and corroded tubulars or offshore caissons using a internal composite structural wrap repair.

2. The internal structural membrane (1) such as carbon fibre but can be combined with glass fibre, aramid or other woven or braided material, combined with a hydrophobic epoxy resin. In certain circumstances the resin may be a urethane based resin.

3. The resin membrane material is infused with the resin using a standard infusion bath/ roller assembly or alternatively using a vacuum system.

4. The infusion is carried out external to the tubular/caisson (2).

5. The method of suspending the composite repair (1) from the positioning tube (3) by means of velcro hangers.

6. The hinge area (A), designed into positioning tube (3) to facilitate wave motion.

7. The hinge area in vent tube (6B) to facilitate wave motion.

8. The combined method of the positioning tube and membrane assembly is positioned into the tubular/caisson utilising the 'daisy chain' lifting arrangements (10) fitted to the positioning tube.

9. The method utilising the weighted segments (14) to restrict movement of under wave action within the positioning tube (3).

10. The method of the structural repair membrane being tied off once it has reached it's predetermined position via the quad lifting assembly (14).

11. The method of the positioning tube (3) being partially filled with water to a point that a resultant head of water is seen at the repair section.

12. A method substantially as described herein and/or with reference to or in accordance with the drawings.

13. A positioning tube for use in the methods of the invention, substantially as described herein and/or with reference to or in accordance with the accompanying drawings.

14. An internal composite structural repaired caisson as described herein and/or with reference to or in accordance with the accompanying drawings.

15. An internal composite structural repaired tubular as described herein and/or with reference to or in accordance with the accompanying drawings.
